# EUROPEAN PATENT APPLICATION

(11) **EP 4 043 766 A1**
(43) Date of publication of application: **17.08.2022**
(21) Application number: 22153667.5
(22) Date of filing: 27.01.2022
(51) Int. Cl.: F16K 31/06

(54) **ELECTRIC DRIVE VALVE**

(30) Priority: 04.02.2021 JP 2021016301
(71) Applicant: Fujikoki Corporation, Tokyo 158-0082 (JP)
(72) Inventor: AMANO, Ayumu, Tokyo, 158-0082 (JP); MIYAMOTO, Kazuhiro, Tokyo, 158-0082 (JP)
(74) Representative: Ter Meer Steinmeister & Partner

(57) **Abstract**

To allow a valve opening operation to be more securely achieved by a valve opening spring, and prevent generation of an operating noise.

An electric drive valve is provided with a valve main body (2) which has a valve chamber (5) communicating with an inflow channel (3) and an outflow channel (4), a valve port (6) which has a valve seat (7) and is disposed between the outflow channel and the valve chamber, a valve body (11) which moves forward and backward with respect to the valve seat, a drive unit (21) which includes a plunger (17) slidably accommodated within the plunger chamber and drives the plunger, a valve holder (12) which supports the valve body within the valve chamber and moves together with the plunger, and a valve opening spring (15) which biases the valve body in a valve opening direction, the electric drive valve is configured to move the valve body to a valve-closed position by the sliding movement of the plunger against a biasing force of the valve opening spring when the drive unit is driven, and move the valve body to a valve-opened position by the biasing force of the valve opening spring when the drive unit is not driven, and the electric drive valve is provided with a sealing member (13) which shuts off the communication of the fluid between the plunger chamber and the valve chamber, and an introduction channel (17a, 12d, 11c) which communicates the plunger chamber with the outflow channel when the valve body is at the valve-closed position.

## Description

### TECHNICAL FIELD

The present invention relates to an electric drive valve, and more particularly to a valve structure which improves an operating characteristic when opening a valve in a direct acting solenoid valve provided with a valve opening spring.

### BACKGROUND ART

An electric drive valve opening and closing a valve with the use of a drive unit such as an electromagnetic actuator has been conventionally used in a refrigeration cycle equipment which is provided with a refrigerant circuit, for example, as an air conditioner, a refrigeration device and a freezing device.

As one of the electric drive valves as mentioned above, there is a solenoid valve which holds a valve-closed state by sucking a plunger on the basis of an electromagnetic force of the solenoid, and opens the valve by the provision of a coil spring (a valve opening spring) biasing the plunger in a direction opposite to the sucking direction (for example, refer to the following patent literature 1).

### CITATION LIST

### PATENT LITERATURE

Patent Literature 1: Japanese Unexamined Patent Publication No. 2020-60269

### SUMMARY OF INVENTION

### TECHNICAL PROBLEM

In the meantime, in the solenoid valve mentioned above, the pressure in a plunger chamber in which the plunger is accommodated is equal to the pressure in an inflow channel side, and the higher fluid pressure in the inflow channel side is applied to a valve body in a valve-closed state in which the valve body is seated on a valve seat. Thus, it is not necessarily easy to secure certainty of the valve opening operation achieved by the valve opening spring. In particular, the greater a diameter of a valve port is, the greater the load applied to the valve body by the differential pressure between the fluid pressure in the inflow channel side and the fluid pressure in the outflow channel side is, thereby making the valve opening hard.

On the contrary, it is conceivable to use a valve opening spring having a great spring load (repulsion force) for securely opening the valve. However, making the spring load great causes enlargement in size of the valve opening spring, and requires a strong attraction force in the solenoid for closing the valve against the biasing force of the valve opening spring, so that there is a risk of enlargement in size of a drive part.

Further, the conventional solenoid valve has a problem in an operating noise. More specifically, a collision noise is generated between parts (between the plunger and an end portion wall surface of the plunger chamber or an attraction element) according to the plunger movement when opening and closing the valve, thereby generating an impact noise caused by a water hammer.

Further, the collision noise and the impact noise mentioned above may impair the quietness in the vehicle, for example, in a case where the solenoid valve is used for a car air-conditioner.

Therefore, an object of the present invention is to improve an operating characteristic of an electric drive valve, in particular, to allow a valve opening operation to be more securely achieved by a valve opening spring. Further, the other object of the present invention is to prevent or suppress generation of an operating noise such as the collision noise between the parts and the impact noise caused by the water hammer.

### SOLUTION TO PROBLEM

In order to solve the problem and achieve the object, an electric drive valve according to the present invention is provided with a valve main body which has a valve chamber communicating with an inflow channel allowing the fluid to flow thereinto and an outflow channel allowing the fluid to flow therefrom, a valve port which has a valve seat and is disposed between the outflow channel and the valve chamber so as to be open to the valve chamber, a valve body which moves forward and backward with respect to the valve seat between a valve-closed position at which the valve body is seated on the valve seat and closes a valve port and a valve-opened position at which the valve body is away from the valve seat and opens the valve port, a drive unit which includes a plunger slidably accommodated within the plunger chamber and drives the plunger, a valve holder which supports the valve body within the valve chamber and moves together with the plunger, and a valve opening spring which biases the valve body in a valve opening direction, the electric drive valve is configured to move the valve body to the valve-closed position by the sliding movement of the plunger against the biasing force of the valve opening spring when the drive unit is driven, and move the valve body to the valve-opened position by the biasing force of the valve opening spring when the drive unit is not driven, and the electric drive valve includes a sealing member which shuts off the communication of the fluid between the plunger chamber and the valve chamber, and an introduction channel which communicates the plunger chamber with the outflow channel when the valve body is at the valve-closed position.

In the electric drive valve according to the present invention, the sealing member shuts off the communication between the valve chamber and the plunger chamber, and the introduction channel is provided for communicating the plunger chamber with the outflow channel when closing the valve, thereby introducing the low fluid pressure in the outflow channel side to the plunger chamber. More specifically, the pressure balance between the plunger chamber and the outflow channel is achieved by communicating the plunger chamber with the outflow channel, and the pressure difference between the plunger chamber and the outflow channel is resolved. Thus, in the electric drive valve according to the present invention, the higher fluid pressure in the inflow channel side is not applied to the valve body in the valve-closed state as is different from the conventional case, the valve body can be pushed up by the smaller force than the conventional one to open the valve, and the valve opening operation can be more securely achieved by the valve opening spring.

According to the present invention, in addition to the certainty of the operation as mentioned above, the spring load (repulsion force) of the valve opening spring can be made smaller. Therefore, the attraction force for attracting the plunger when closing the valve can be made smaller, and the drive part (solenoid) can be downsized. Further, the electric drive valve having the great valve capacity can be constructed by enlarging a bore of the valve port.

According to an aspect of the present invention, the plunger, the valve holder and the valve body are coaxially arranged, and the introduction channel is formed as a through hole which passes through the plunger, the valve holder and the valve body in a direction of a center axis and is formed so as to communicate a back space and the outflow channel, on the assumption that the "back space" is a space portion which is positioned in a farther side from the valve seat than the plunger in an internal space of the plunger chamber.

Further, the introduction channel may have a narrow section in which a transverse area (flow channel cross-sectional area) thereof is reduced (a diameter thereof is reduced in a case where the introduction channel has a circular cross section). According to the aspect mentioned above, the movement of the plunger when opening the valve can be slowed by throttling the flow of the fluid discharged to the exhaust channel from the back space. Therefore, it is possible to prevent or suppress generation of a collision noise caused by the movement of the plunger (for example, the noise generated by the collision of the plunger against the wall surface of the end portion of the plunger chamber), and generation of the water hammer caused by a rapid valve opening operation (rapid movement of the valve body in the direction of opening the valve), and it is possible to achieve the improvement of quietness by the reduction of the operating noise. The narrow section may be provided, for example, in an end portion of the introduction channel in the outflow channel side.

Further, in the aspect mentioned above, a communication hole communicating a front space with the introduction channel may be further provided, on the assumption that the "front space" is a space portion which is positioned in a closer side to the valve seat than the plunger in the internal space of the plunger chamber, and the communication hole is configured to have a smaller transverse area (flow channel cross-sectional area) (have a smaller diameter in a case where the communication hole has a circular cross section) than the introduction channel at least in a part of the communication hole (or may be over a whole thereof, that is, over a total length thereof). A cross sectional shape of each of the introduction channel, the narrow section and the communication hole is typically a circular shape, however, may have the other shapes.

When opening the valve, the plunger moves backward and a rear end portion (an end portion in an opposite side to the valve body) of the plunger moves to the back space, so that the fluid in the back space is pushed away by the rear end portion of the plunger. However, the fluid moves to the front surface side (front space) of the plunger through a gap between the plunger and an inner wall surface of the plunger chamber, or flows toward the outflow channel within the introduction channel. Further, a part of the fluid flowing within the introduction channel flows into the front space through the communicating hole. Here, by throttling the communicating hole narrower and limiting the fluid passing through the communicating hole, it is possible to obtain the same effect as that of the narrow section, that is, prevent or suppress the generation of the collision noise between the parts and the water hammer by slowing the movement of the plunger.

Further, an operation speed (a degree of slowing the movement) of the plunger can be regulated by regulating the transverse area of the communication hole and the narrow section.

Further, according to the other aspect of the present invention, the drive unit is provided with an attraction element which attracts the plunger, the plunger is arranged in an upper portion of the attraction element as well as the attraction element is arranged in an upper portion of the valve chamber on the assumption that the "upper" is a direction in which the valve body moves away from the valve seat, and a "lower" is a direction in which the valve body moves close to the valve seat, the valve holder is provided so as to connect the plunger and the valve body through the attraction element, and the sealing member is provided so as to be interposed between the attraction element and the valve holder while allowing the valve holder to move up and down according to the opening and closing motion of the valve.

According to the aspect mentioned above, by interposing the sealing member between the valve holder and the attraction element, a sliding resistance is generated when the valve holder moves up and down, and it is possible to slow the operation of the valve holder (accordingly the valve body fixed to the valve holder) on the basis of the sliding resistance. Therefore, it is possible to reduce the operating noise in the same manner as the narrow section and the communication hole mentioned above.

In the other aspect mentioned above, the sealing member may be constructed by a ring-shaped member which surrounds an outer peripheral surface of the valve holder, and the ring-shaped member may be fixed to any one of the outer peripheral surface of the valve holder and the through hole of the attraction element through which the valve holder passes.

### EFFECT OF INVENTION

According to the present invention, the valve opening operation can be more securely performed by the valve opening spring. Further, it is possible to prevent or suppress the generation of the operating noise such as the collision noise between the parts and the impact noise caused by the water hammer.

The other objects, features and advantages of the present invention are made apparent by the following description of embodiments of the present invention described on the basis of the accompanying drawings. In the drawings, same reference numerals denote the same or corresponding portions.

### BRIEF DESCRIPTION OF DRAWINGS

Fig. 1 is a vertical cross sectional view showing an electric drive valve (in a valve-opened state) according to a first embodiment of the present invention.
Fig. 2 is a vertical cross sectional view showing the electric drive valve (in a valve-closed state) according to the first embodiment.
Fig. 3 is a plan view showing a valve body provided in the electric drive valve according to the first embodiment.
Fig. 4 is a front elevational view showing the valve body provided in the electric drive valve according to the first embodiment.
Fig. 5 is a bottom elevational view showing the valve body provided in the electric drive valve according to the first embodiment.
Fig. 6 is a vertical cross sectional view showing the valve body provided in the electric drive valve according to the first embodiment.
Fig. 7 is a vertical cross sectional view showing an electric drive valve (in a valve-opened state) according to a second embodiment of the present invention.

### DESCRIPTION OF EMBODIMENTS

### [First Embodiment]

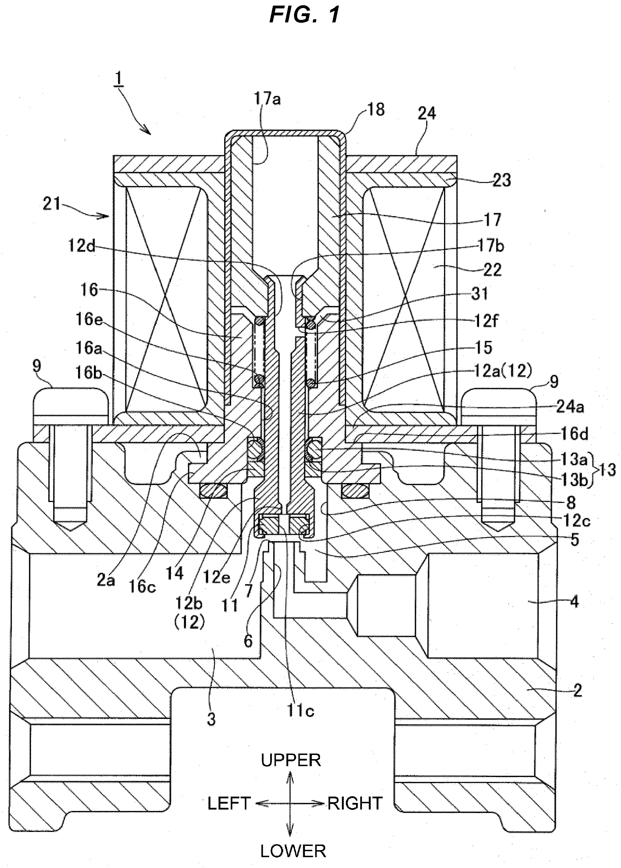

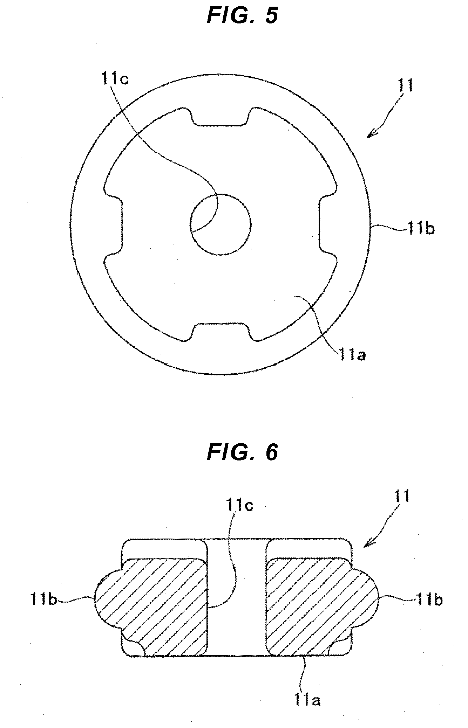

As shown in Figs. 1 to 6, an electric drive valve 1 according to a first embodiment of the present invention is a solenoid valve which opens and closes the refrigerant flow by using a solenoid 21 and a valve opening spring 15, and has a valve body 11 which shuts off and opens a refrigerant flow channel formed in an inner portion of a valve main body 2, and a drive mechanism which drives the valve body 11. Each of the drawings shows a two-dimensional coordinates which represents vertical and lateral directions and is orthogonal to each other, and the following description will be given on the basis of these directions. However, since the electric drive valve according to the present invention and the embodiment can be used in various directions, the directions are provided as a matter of convenience, and do not restrict a configuration of each of portions of the present invention.

The valve main body 2 has a valve chamber 5, an inflow channel 3 which allows a refrigerant to flow into the valve chamber 5, an outflow channel 4 which allows the refrigerant to flow out of the valve chamber 5, a valve port 6 which is arranged between these two flow channels 3 and 4, and a valve body fixing port 8 which is formed so as to be opposed to the valve port 6. The valve port 6 is opened upward within the valve chamber 5, and an upper surface of the valve port 6 forms a valve seat 7 on which the valve body 11 is seated (with which the valve body 11 comes into contact to close the valve port 6).

The valve body fixing port 8 is provided with a drive mechanism for the valve body 11 which utilizes an attraction force of a solenoid 21 and a repulsion force of a valve opening spring 15. In the present embodiment, the drive mechanism has the solenoid 21, a plunger 17, a valve holder 12 which connects the plunger 17 and the valve body 11 and transmits the upward and downward motion of the plunger 17 to the valve body 11, and a valve opening spring 15 which biases the valve body 11 in a valve opening direction (upward) via the valve holder 12 by biasing the plunger 17 upward.

The solenoid 21 has an exciting coil 22, and an attraction element 16 which attracts the plunger 17. The exciting coil 22 is provided with a bobbin 23 which has a tubular portion at the center thereof, and a housing 24 which is fixed to an outer peripheral portion of the bobbin 23. The attraction element 16 and the plunger 17 are arranged in the tubular portion of the bobbin 23 in a state in which they are accommodated in a sleeve 18. The valve holder 12 is accommodated within the tubular portion of the bobbin 23 in the exciting coil 22.

A locking stop portion 2a integrally formed with the valve main body 2 is provided around a fixed position of the attraction element 16 in the valve main body 2. Further, a locked portion 16c is provided in an outer periphery of the attraction element 16. Further, the locking stop portion 2a is engaged with the locked portion 16c by caulking, and the attraction element 16 is fixed to the valve main body 2.

An inner peripheral portion of a housing 24 of the exciting coil 22 is provided with an engagement portion 24a which engages with a step portion 16d disposed in an outer periphery of the attraction element 16. The housing 24 is fixed to the valve main body 2 by screwing to the valve main body 2 with a screw 9 in a state in which the step portion 16d of the attraction element 16 is engaged with the engagement portion 24a of the housing 24.

The attraction element 16 is fixed to a center portion of an upper surface of the valve main body 2 so as to seal off the valve body fixing port 8. The sliding hole 16a having a smaller diameter than the valve body fixing port 8 passes through the attraction element 16 along a center axis thereof, and the valve holder 12 is inserted into the sliding hole 16a. Further, a lower end portion of the sliding hole 16a forms an expanded diameter portion 16b a diameter of which is enlarged so as to install a sealing member 13 interposed between the attraction element 16 and the valve holder 12.

The sealing member 13 installed in the expanded diameter portion 16b is interposed between the valve holder 12 and the attraction element 16 for shutting off the communication of the refrigerant between the inflow channel 3 (valve chamber 5) and the plunger chamber (internal space of the sleeve 18 in which the plunger 17 is accommodated), and prevents the high-pressure refrigerant from infiltrating into the plunger chamber from the inflow channel 3 side while allowing the valve holder 12 to slide in a vertical direction together with the opening and closing of the valve. In the present embodiment, the sealing member 13 is fixed to the attraction element 16 side, and is constructed by an O-ring 13a which is installed within the expanded diameter portion 16b so as to be pressed against a ceiling surface of the expanded diameter portion 16b by a retaining ring 14 press fitted to the expanded diameter portion 16b, and a ring-shaped member 13b which is arranged so as to be interposed between the O-ring 13a and the outer peripheral surface of the valve holder 12 and is made of a fluorine contained resin.

The valve holder 12 has a shaft portion 12a which is coaxial with a center axis of the attraction element 16, and a valve body support portion 12b which is disposed in a lower end of the shaft portion 12a in such a manner as to be arranged in an inner portion of the valve chamber 5. Further, a valve holder center hole 12d is formed in the valve holder 12, the valve holder center hole 12d vertically passing through the shaft portion 12a and the valve body support portion 12b along a center axis. The valve holder center hole 12d constructs an introduction channel according to the present invention together with a plunger center hole 17a and a valve body center hole 11c mentioned later. Further, a small diameter portion 12e having a reduced diameter is provided in a lower end portion of the valve holder center hole 12d. The small diameter portion 12e corresponds to a narrow section according to the present invention.

Further, a transverse hole (communicating hole) 12f is formed within the valve holder 12, the transverse hole 12f being branched from an upper portion of the valve holder center hole 12d and communicating with a front space 31 of the plunger chamber. The transverse hole 12f has a smaller diameter than the valve holder center hole 12d, and forms a flow channel which communicates a back space 32 of the plunger chamber with the front space 31. Functions of the introduction channels 17a, 12d and 11c, the small diameter portion 12e and the transverse hole 12f will be later mentioned in detail.

The valve body support portion 12b of the valve holder 12 has a valve body accommodation hole 12c which retains the valve body 11 in a lower surface side, and the valve body 11 is fixed within the valve body accommodation hole 12c so as to be opposed to the valve seat 7 in the upper surface of the valve port by caulking a lower end portion of a peripheral wall of the valve body support portion 12b after accommodating the valve body 11 in the valve body accommodation hole 12c.

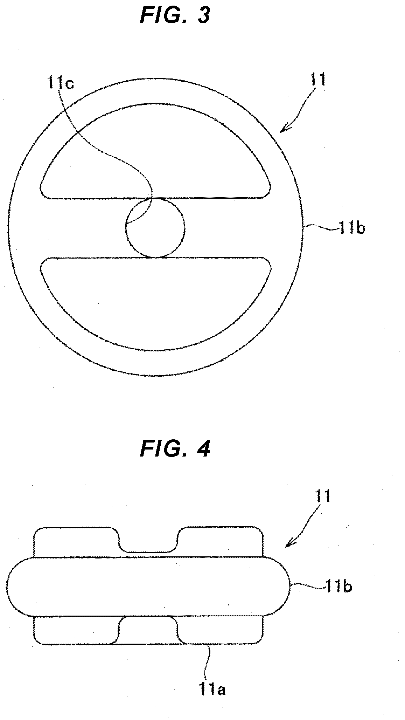

The valve body 11 has a discoidal shape as a whole, has in a lower surface a flat seating surface 11a coming into contact with the valve seat 7 and closing the valve port 6, and is provided with a center hole (valve body center hole) 11c vertically passing through a center shaft portion, as shown in Figs. 3 to 6 in an enlarged manner. Further, a peripheral surface of the valve body 11 is provided with a sealing portion 11b which protrudes outward and comes into contact with an inner peripheral surface of the valve body accommodation hole 12c of the valve holder 12. The sealing portion 11 b is configured to prevent the high-pressure refrigerant in the inflow channel 3 side from infiltrating into the valve body center hole 11c in a valve-closed state in which the valve body 11 is seated on the valve seat 7, and leaking out to the outflow channel 4 side.

The plunger 17 is arranged in an opposite side to the valve main body 2 in the attraction element 16, the plunger 17 sliding in a vertical direction, that is, a direction which is coaxial with the center axis and comes close to and away from (comes into contact with and separates from) the attraction element 16. The plunger 17 is a tubular member having in a center portion a center hole (plunger center hole) 17a which extends in an axial direction and passes through the plunger 17, a lower end portion (portion in the attraction element 16 side) of the center hole is formed as a reduced diameter portion having a reduced diameter, and an upper end portion of the shaft portion 12a of the valve holder 12 is inserted into the reduced diameter portion 17b. Further, the upper end portion of the shaft portion 12a is expanded within the plunger center hole 17a according to a caulking process, and the expanded portion is engaged with the reduced diameter portion 17b, thereby connecting the valve holder 12 to the plunger 17. Thus, the valve holder 12 moves up and down in unison with the plunger 17 together with the valve body 11.

An opening portion in the plunger 17 side of the sliding hole 16a disposed in the attraction element 16 has an inner diameter which is greater than an outer diameter of the shaft portion 12a of the valve holder 12, and is installed in a space between an outer peripheral surface of the shaft portion 12a and an inner peripheral surface of the sliding hole 16a in a state in which a valve opening spring 15 constructed by a coil spring is compressed. One end of the valve opening spring 15 comes into contact with the attraction element 16 side of an end of the plunger 17, and the other end thereof comes into contact with a step portion 16e which is formed in an inner periphery of the sliding hole 16a. Thus, the valve opening spring 15 biases the plunger 17 in a direction of getting away from the attraction element 16 (upward).

A sleeve 18 is disposed in an outer periphery of the attraction element 16 and the plunger 17, and the sleeve accommodates both the attraction element 16 and the plunger 17. The sleeve 18 is a bottomless and covered tubular member in which a top surface (upper surface) is closed and a bottom surface (lower surface) is opened, and an inner surface of a ceiling portion of the closed sleeve 18 forms a stopper surface with which the plunger 17 comes into contact in a valve-opened state shown in Fig. 1. An open lower end portion of the sleeve 18 in the attraction element 16 side is joined by being fitted and welded to an outer periphery of the attraction element 16 in such a manner as to be put on an upper portion of the attraction element 16.

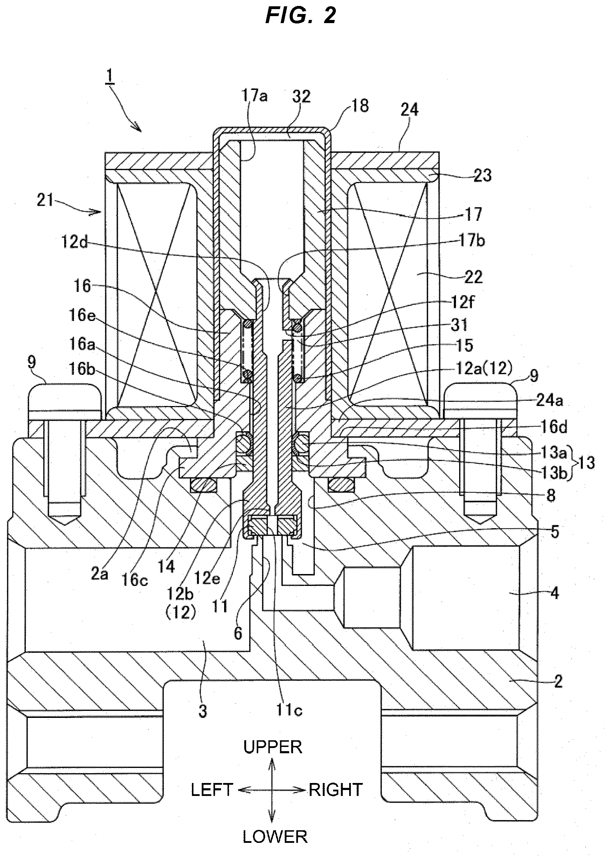

An upper portion in the internal space of the sleeve 18 forms a plunger chamber which accommodates the plunger 17 in a vertically movable manner, and an internal space 32 above the plunger 17 accommodated in the plunger chamber (upper space formed when the plunger 17 moves down as shown in Fig. 2) corresponds to the back space according to the present invention. Further, an internal space below the plunger 17 corresponds to the front space 31 according to the present invention.

In the electric drive valve according to the present embodiment as mentioned above, when the exciting coil 22 is energized in the valve-opened state shown in Fig. 1 and the attraction element 16 is excited, the plunger 17 is attracted to the attraction element 16 and moves downward against the biasing force of the valve opening spring 15. Thus, the shaft portion 12a of the valve holder 12 fixed to the plunger 17 moves within the sliding hole 16a, and the valve body 11 fixed to the valve body support portion 12b in the lower end of the valve holder moves downward within the valve chamber 5, so that the valve body 11 comes into close contact with the valve seat 7 and closes the valve port 6. As a result, the refrigerant flow channel from the inflow channel 3 to the outflow channel 4 is shut off and the valve-closed state shown in Fig. 2 is formed.

On the contrary, when the energization of the exciting coil 22 is stopped, the attraction force applied to the plunger 17 by the attraction element 16 is lost, and the plunger 17 is disconnected from the attraction element 16 by the repulsion force of the valve opening spring 15 provided in a compressed state between the plunger 17 and the attraction element 16 and moves upward until the plunger 17 comes into contact with the ceiling portion of the sleeve 18. Along with this, the valve holder 12 and the valve body 11 fixed to the plunger 17 move upward. As a result, a gap is generated between the valve body 11 and the valve seat 7 as shown in Fig. 1, the valve-opened state in which the valve port 6 is opened is formed, and the refrigerant flows from the inflow channel 3 to the outflow channel 4.

In the electric drive valve 1 according to the present embodiment, in the valve-closed state shown in Fig. 2, the sealing member 13 interposed between the attraction element 16 and the valve holder shaft portion 12a shuts off the communication between the inflow channel 3 side and the plunger chamber (prevents the high-pressure refrigerant in the inflow channel 3 side from infiltrating into the plunger chamber), and the introduction channel constructed by the plunger center hole 17a, the valve holder center hole 12d and the valve body center hole 11c communicates the outflow channel 4 with the plunger chamber. As a result, the plunger chamber is under the lower pressure in the outflow channel 4 side, and the higher fluid pressure (pressure in the valve closing direction) in the inflow channel 3 side is not applied to the plunger 17. Therefore, the force for pushing up the plunger 17 when opening the valve can be made smaller than the conventional one, and the valve can be more securely opened by the valve opening spring 15.

Further, when the valve changes from the valve-closed state (Fig. 2) to the valve-opened state (Fig. 1), the refrigerant within the plunger chamber moves along with the movement of the plunger 17. More specifically, the refrigerant in the upper space (back space) 32 of the plunger chamber is pushed away by the ascending plunger 17 and moves from the back side to the front side of the plunger 17 through three routes. More specifically, three routes are (1) a route flowing into the front side (front space) 31 of the plunger 17 through a portion between the outer peripheral surface of the plunger 17 and the inner wall surface of the sleeve 18, (2) a route discharging to the outflow channel 4 through the plunger center hole 17a, the valve holder center hole 12d and the valve body center hole 11c in this order, and (3) a route in which a part of the refrigerant moving forward to the valve holder center hole 12d from the plunger center hole 17a flows into the transverse hole 12f branched from the valve holder center hole 12d and flows into the front space 31 of the plunger chamber.

In the route (2) mentioned above, a cross section of the flow channel is narrowed down by the provision of the small diameter portion 12e in the lower end portion of the valve holder center hole 12d, and a flow rate of the refrigerant discharged to the outflow channel 4 is limited. Therefore, it is possible to slow down an upward moving speed of the plunger 17. In the same manner, in the route (3) mentioned above, a diameter of the transverse hole 12f is made smaller than the valve holder center hole 12d. Therefore, a flow rate of the refrigerant flowing into the front space 31 through the transverse hole 12f is limited, and an upward movement of the plunger 17 is slowed.

Therefore, according to the present embodiment, it is possible to reduce a collision noise of the plunger 17 against the ceiling portion of the sleeve 18. Further, since the movement of the valve body 11 when opening the valve is slowed, it is possible to prevent or suppress the generation of the water hammer. Further, since the sliding resistance is generated between the valve holder 12 and the sealing member 13 when the valve holder 12 moves up and down, it is possible to suppress a rapid movement of the plunger 17, the valve holder 12 and the valve body 11 in view of this, and it is possible to reduce the operating noise.

### [Second Embodiment]

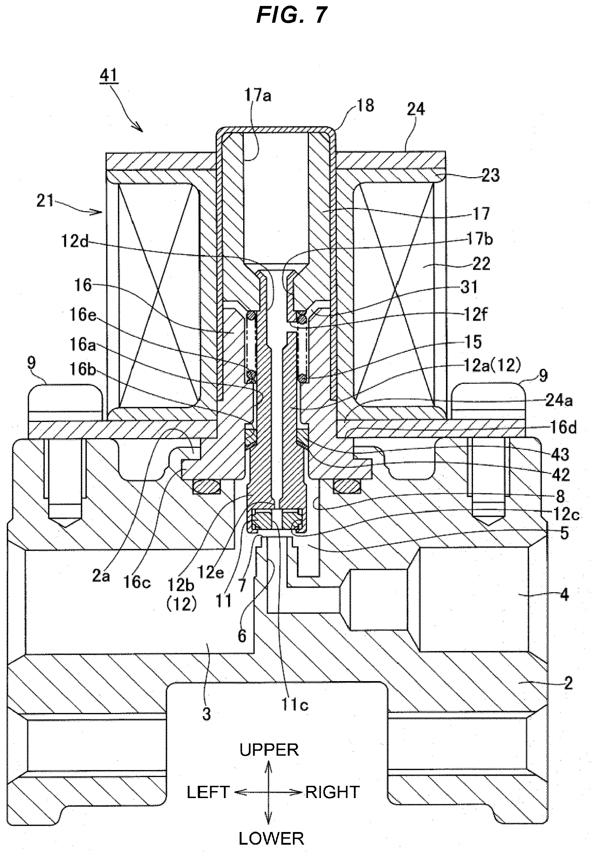

As shown in Fig. 7, an electric drive valve 41 according to a second embodiment of the present invention is provided with the introduction channel (the plunger center hole 17a, the valve holder center hole 12d and the valve body center hole 11c) which introduces the low pressure in the outflow channel side to the plunger chamber, in the same manner as the first embodiment, however, is different in a structure of a sealing member which shuts off the communication of the refrigerant between the inflow channel side and the plunger chamber.

More specifically, in the first embodiment, the sealing member 13 is fixed to the attraction element 16 side. However, in the present embodiment, a sealing member 42 is fixed to the valve holder 12 side. More specifically, the ring-shaped sealing member 42 made of a fluorine contained resin is mounted in such a manner as to be put on an upper end portion (shoulder-shaped bulging portion) of the valve body support portion 12b in the lower end of the valve holder, and a retaining ring 43 is mounted so as to cover from the sealing member 42, thereby fixing the sealing member 42 to the upper surface portion of the valve body support portion 12b.

The sealing member 42 comes into contact with the inner peripheral surface of the expanded diameter portion 16b of the attraction element 16 (sliding hole 16a) while allowing the valve holder 12 (shaft portion 12a) to slide along with the vertical movement thereof, thereby preventing the high-pressure refrigerant in the inflow channel 3 side from infiltrating into the plunger chamber.

Since the other structures are the same as those of the first embodiment, same reference numerals are attached and a redundant explanation will be omitted.

The embodiments according to the present invention are described above. However, it is apparent for a person skilled in the art that the present invention is not limited to these embodiments, but can be variously modified within the scope of the claims.

For example, in the embodiments, the plunger 17, the valve holder 12 and the valve body 11 are respectively constructed by the different members. However, two or three (for example, the plunger 17 and the valve holder 12, or the valve holder 12 and the valve body 11, or the plunger 17, the valve holder 12 and the valve body 11) among them may be constructed integrally (constructed by one member), and these structures are included in the present invention.

The electric drive valve according to the present invention can be preferably used in the refrigeration cycle equipment including the refrigerant cycle, typically such as the air conditioner and the freezer and refrigerator. However, the electric drive valve according to the present invention can be used for the other various intended uses without being limited to the above. Therefore, the "fluid" according to the present invention includes various liquids and gases in addition to the heat medium (refrigerant and heat transfer medium). Further, the drive unit according to the present invention is typically the electromagnetic drive unit, however, may be the other electric drive units such as a motor. The present invention can be applied to the other electric drive valves such as a motor valve.

### REFERENCE SIGNS LIST

- 1, 41: electric drive valve
- 2: valve main body
- 2a: locking stop portion
- 3: inflow channel
- 4: outflow channel
- 5: valve chamber
- 6: valve port
- 7: valve seat
- 8: valve body fixing port
- 9: screw
- 11: valve body
- 11a: seating surface
- 11b: sealing portion
- 11c: valve body center hole (introduction channel)
- 12: valve holder
- 12a: shaft portion
- 12b: valve body support portion
- 12c: valve body accommodation hole
- 12d: valve holder center hole (introduction channel)
- 12e: small diameter portion (narrow section)
- 12f: transverse hole (communicating hole)
- 13, 42: sealing member
- 13a: O-ring
- 13b: ring-shaped member
- 14, 43: retaining ring
- 15: valve opening spring
- 16: attraction element
- 16a: sliding hole
- 16b: expanded diameter portion
- 16c: locked portion
- 16d, 16e: step portion
- 17: plunger
- 17a: plunger center hole (introduction channel)
- 17b: reduced diameter portion
- 18: sleeve
- 21: solenoid
- 22: exciting coil
- 23: bobbin
- 24: housing
- 31: front space
- 32: back space

## Claims

1. An electric drive valve comprising:
a valve main body which has a valve chamber communicating with an inflow channel allowing the fluid to flow thereinto and an outflow channel allowing the fluid to flow therefrom;
a valve port which has a valve seat and is disposed between the outflow channel and the valve chamber so as to be open to the valve chamber;
a valve body which moves forward and backward with respect to the valve seat between a valve-closed position at which the valve body is seated on the valve seat and closes a valve port and a valve-opened position at which the valve body is away from the valve seat and opens the valve port;
a drive unit which includes a plunger slidably accommodated within the plunger chamber and drives the plunger;
a valve holder which supports the valve body within the valve chamber and moves together with the plunger; and
a valve opening spring which biases the valve body in a valve opening direction,
wherein the electric drive valve is configured to move the valve body to the valve-closed position by the sliding movement of the plunger against the biasing force of the valve opening spring when the drive unit is driven, and move the valve body to the valve-opened position by the biasing force of the valve opening spring when the drive unit is not driven, and
wherein the electric drive valve comprises:
a sealing member which shuts off the communication of the fluid between the plunger chamber and the valve chamber; and
an introduction channel which communicates the plunger chamber with the outflow channel when the valve body is at the valve-closed position.

2. The electric drive valve according to claim 1, wherein the plunger, the valve holder and the valve body are coaxially arranged, and
wherein the introduction channel is formed as a through hole which passes through the plunger, the valve holder and the valve body in a direction of a center axis and is formed so as to communicate a back space and the outflow channel, on the assumption that the back space is a space portion which is positioned in a farther side from the valve seat than the plunger in an internal space of the plunger chamber.

3. The electric drive valve according to claim 1 or 2, wherein the introduction channel has a narrow section in which a transverse area thereof is reduced.

4. The electric drive valve according to claim 3, wherein the narrow section is provided in an end portion in the outflow channel side.

5. The electric drive valve according to claim 3 or 4, wherein a communication hole communicating a front space with the introduction channel is provided, on the assumption that the front space is a space portion which is positioned in a closer side to the valve seat than the plunger in the internal space of the plunger chamber, and
wherein the communication hole has a smaller transverse area than the introduction channel at least in a part of the communication hole.

6. The electric drive valve according to any one of claims 1 to 5, wherein the drive unit is provided with an attraction element which attracts the plunger,
wherein the plunger is arranged in an upper portion of the attraction element as well as the attraction element is arranged in an upper portion of the valve chamber on the assumption that the upper is a direction in which the valve body moves away from the valve seat, and a lower is a direction in which the valve body moves close to the valve seat,
wherein the valve holder is provided so as to connect the plunger and the valve body through the attraction element, and
wherein the sealing member is provided so as to be interposed between the attraction element and the valve holder while allowing the valve holder to move up and down according to the opening and closing motion of the valve.

7. The electric drive valve according to claim 6, wherein the sealing member is a ring-shaped member which surrounds an outer peripheral surface of the valve holder, and
wherein the ring-shaped member is fixed to any one of the outer peripheral surface of the valve holder and the through hole of the attraction element through which the valve holder passes.
